Europäisches Patentamt

European Patent Office

Office européen des brevets

(19)

(11)     EP 0 852 193 B1

(12)     EUROPÄISCHE PATENTSCHRIFT

(45) Veröffentlichungstag und Bekanntmachung des
Hinweises auf die Patenterteilung:
**30.08.2000   Patentblatt 2000/35**

(51) Int Cl.[7]: **B60R 22/46**, B60R 21/00

(21) Anmeldenummer: **97119246.3**

(22) Anmeldetag: **04.11.1997**

(54) **Verfahren zum Auslösen einer Sicherheitseinrichtung, insbesondere eines Gurtstraffers, in einem Fahrzeug zur Personenbeförderung**

Method for triggering a safety device, particularly a belt tensioner in a passenger transport

Procédé pour déclencher un dispositif de sécurité, en particulier un tendeur de ceinture dans un véhicule de transport pour individus

(84) Benannte Vertragsstaaten:
**DE FR GB SE**

(30) Priorität: **26.11.1996   DE 19648917**

(43) Veröffentlichungstag der Anmeldung:
**08.07.1998   Patentblatt 1998/28**

(73) Patentinhaber: **TEMIC TELEFUNKEN
microelectronic GmbH
90411 Nürnberg (DE)**

(72) Erfinder:
• **Held, Christian
86529 Schrobenhausen (DE)**

• **Schwarzbauer, Robert
86570 Inchenhofen (DE)**
• **Steurer, Helmut
85302 Gerolsbach-Junkenhofen (DE)**
• **Watzka, Willibald
86551 Aichach (DE)**

(74) Vertreter: **Maute, Hans-Jürgen, Dipl.-Ing.
TEMIC TELEFUNKEN microelectronic GmbH
Postfach 35 35
74025 Heilbronn (DE)**

(56) Entgegenhaltungen:
EP-A- 0 816 188          WO-A-89/08036
WO-A-97/08024          DE-A- 3 942 011

**Beschreibung**

Die Erfindung betrifft ein Verfahren zum Auslösen einer Sicherheitseinrichtung, insbesondere eines Gurtstraffers, in einem Fahrzeug zur Personenbeförderung.

Bei Sicherheitssystemen in Fahrzeugen zur Personenbeförderung, bei denen Sicherheitseinrichtungen, wie Airbags, Gurtstraffer, Überrollbügel und dergleichen im Falle eines gefährlichen Unfalls, insbesondere eines gefährlichen Aufpralls ausgelöst werden, um die im Fahrzeug befindlichen Personen soweit als möglich vor Verletzungen zu schützen, ist es nicht nur erforderlich, daß ein gefährlicher Unfall einwandfrei erkannt wird, sondern auch daß die einzelnen Sicherheitseinrichtungen jeweils zu einem optimalen Zeitpunkt ausgelöst werden, um ihre größtmögliche Schutzwirkung zu entfalten.

Bei einem Frontalaufprall eines Fahrzeugs auf ein Hindernis ist es beispielsweise nötig, einen Gurtstraffer möglichst unmittelbar nach dem sicheren Erkennen des gefährlichen Aufpralls zu betätigen, um die im Fahrzeug befindlichen Personen sicher in ihren Sitzen festzuhalten, während die Auslösung des Airbags so auf die durch den Aufprall bewirkte relative Vorwärtsbewegung der Personen abgestimmt sein muß, daß der Kopf von Fahrzeuginsassen erst dann auf den Airbag auftrifft, wenn dessen Aufblasen beendet ist.

Bei einem Unfall mit Heckaufprall, wenn also das betrachtete Fahrzeug von hinten gerammt wird, werden die Insassen zunächst fest in ihre Sitze gedrückt und dann wieder nach vorne geworfen, wobei sie in eine so ungünstige Position geraten, daß die Sicherheitseinrichtungen, also die Gurte und ggf. der Airbag, stark in ihrer Wirkung nachlassen. Erfolgt nach einem Heckaufprall kein weiterer Aufprall, so ist dies relativ unkritisch. Tritt jedoch nach einem Heckaufprall auch noch ein gefährlicher Frontaufprall auf, wie es häufig bei Serienunfällen insbesondere auf Autobahnen vorkommt, besteht jedoch die Gefahr, daß die durch den Heckaufprall aus ihrer üblichen Sitzposition herausgeworfenen Personen von den Sicherheitseinrichtungen nicht mehr hinreichend geschützt werden können.

Während bei einem alleinigen Heckaufprall die Betätigung von Sicherheitseinrichtungen, wie Gurtstraffern und Airbag kaum nötig ist, ist es jedoch bei einem Heckaufprall mit nachfolgendem Frontaufprall für die Insassen eines Fahrzeugs deutlich besser, wenn der Gurtstraffer beim Heckaufprall betätigt wird, so daß die Fahrzeuginsassen in ihren Sitzen festgezurrt werden. Diese Betätigung der Gurtstraffer sollte zweckmäßigerweise dann erfolgen, wenn die Fahrzeuginsassen am weitesten in ihre Sitze hineingedrückt sind. Dieser Zeitpunkt liegt im Umkehrpunkt der Rückwärtsbewegung der Fahrzeuginsassen relativ zum Fahrzeug, fällt also mit dem Zeitpunkt zusammen, in dem die Rückwärtsbewegung in eine Vorwärtsbewegung übergeht.

In der EP 0816188 A (Stand der Technik nach Art. 54(3) EPÜ) ist ein Verfahren zum Auslösen eines Gurtstraffers beschrieben, bei dem bei einem Heckaufprall eine auf das Fahrzeug wirkende Beschleunigung mit einem einen Extremwert aufweisenden zeitlichen Verlauf erfaßt und in ein Beschleunigungssignal umgesetzt wird, das der in Fahrzeuglängsrichtung wirkende Beschleunigung entspricht, und bei dem mit dem Beschleunigungssignal ein mit einer Zeitfunktion und einem Korrekturterm gewichtetes Integral als Auswertesignal gebildet wird. Ein Auslösesignal wird zur Betätigung der Sicherheitseinrichtung erzeugt, wenn das aus dem Beschleunigungssignal ermittelte Auswertesignal einen Schwellenwert G1 überschreitet.

Dieses Integral wird jedoch erst gebildet, wenn eine positive Fahrzeugbeschleunigung erkannt wird. Dies kann durch einen Vergleich des Beschleunigungssignals mit einem Erkennungsschwellenwert erkannt werden. Darüber hinaus wird auch vorgeschlagen, ein Überwachungssignal zu bilden, dessen Betrag mit einem zugehörigen Grenzwert verglichen wird.

Erst durch Überschreiten dieses Grenzwertes G2 durch den Betrag dieses Überwachungssignals wird ein Startzeitpunkt definiert, ab dem die Auswertung des Beschleunigungssignals durch Bildung des Auswertesignals hinsichtlich eines Heckaufpralls begonnen wird. Dieses Überwachungssignal kann durch das Beschleunigungssignal selbst oder durch das zeitlich integrierte Beschleunigungssignal gebildet werden, ist jedoch nicht identisch mit dem als Auswertesignal zu verwendenden Integral.

Davon ausgehend liegt der Erfindung die Aufgabe zu Grunde, ein Verfahren zum Auslösen einer Sicherheitseinrichtung, insbesondere eines Gurtstraffers, zu schaffen, das es insbesondere ermöglicht, nach einem Heckaufprall die Sicherheitseinrichtung zu einem optimalen Zeitpunkt hinsichtlich der Schutzfunktion des Gurtstraffers auszulösen.

Diese Aufgabe wird von den Verfahren nach Anspruch 1 oder Anspruch 2 gelöst.

Es wird also aus einem der in Fahrzeuglängsrichtung wirkenden Beschleunigung entsprechenden Beschleunigungssignal ein Integral gebildet, das zur Erzeugung eines die Sicherheitseinrichtung betätigenden Auslösesignals mit einem ersten Schwellenwert und mit einem Auslöseschwellenwert verglichen wird, wobei das Auslösesignal bei einer Über- bzw. Unterschreitung des Auslöseschwellenwertes nur dann erzeugt wird, wenn das Integral vorher den ersten Schwellenwert bereits unter- bzw. überschritten hatte. Hierdurch läßt sich nicht nur der Umkehrpunkt der Rückwärtsbewegung in die Vorwärtsbewegung der Fahrzeuginsassen zuverlässig ermitteln, sondern es können auch Fehlfunktionen der Beschleunigungsaufnehmer, die zu einer Fehlauslösung infolge von Falschsignalen führen könnten, erkannt und damit abgefangen werden.

Zur Auffindung des optimalen Zeitpunkts für die Auslösung der Sicherheitseinrichtung im Falle eines Heckunfalls werden ein Fensterintegral und ein kontinuierliches Integral unabhängig voneinander hinsichtlich ihres negativen oder positiven Ausschlags bewertet. Das Fensterintegral kann dabei zusätzlich noch hinsichtlich seines positiven bzw. negativen Überschwingens beurteilt werden. Die Überwachung des negativen bzw. positiven Ausschlags der beiden Integrale dient hierbei zur sicheren Unterscheidung eines durch einen gefährlichen Aufprall erzeugten Beschleunigungssignal von einem Falschsignal, während das Überschwingen des Fensterintegrals zur positiven bzw. negativen Seite, auf der der Auslöseschwellenwert gewählt ist, zur Ermittlung des günstigsten Auslösezeitpunktes dient. Das Überschwingen des Beschleunigungssignals tritt jedoch nur auf, wenn ein Hochpaßfilter vorhanden ist, das schaltungstechnisch oder softwaremäßig realisiert werden kann.

Bei einer anderen Ausgestaltung der Erfindung wird zum Auffinden des optimalen Auslösezeitpunkts bei einem Heckaufprall allein das kontinuierliche, aus dem Beschleunigungssignal berechnete Integral überwacht, wobei der Auslöseschwellenwert nach dem Erreichen eines ersten Schwellenwerts dem Integral so lange nachläuft, bis es sein Minimum oder Maximum angenommen hat. Die Erzeugung des Auslösesignals erfolgt dabei in dem Moment, in dem der momentane Wert des kontinuierlichen Integrals nahezu unmittelbar nach dem Erreichen seines Minimums oder Maximums den Auslöseschwellenwert erreicht.

Um Fehlauslösungen infolge von Falschsignalen bei einem Sicherheitssystem, das mindestens zwei Beschleunigungsaufnehmer, also mehr als einen Beschleunigungsmeßkanal aufweist, noch sicherer ausschließen zu können, ist es erfindungsgemäß vorgesehen, zusätzlich eine Überprüfung von unfalleigentümlichen Minimalkriterien in den Beschleunigungssignalen geeigneter Meßkanäle vorzunehmen. Hierzu werden aus den einzelnen Beschleunigungssignalen der ausgewählten Kanäle Fensterintegrale gebildet, die mit entsprechenden Schwellenwerten verglichen werden.

Vorteilhafte Weiterbildungen der Erfindung sind in den Unteransprüchen beschrieben.

Die Erfindung wird im Folgenden beispielsweise an Hand der Zeichnung näher erläutert. In dieser zeigt:

Fig. 1 eine schematische Darstellung eines Fahrzeugs,

Fig. 2 ein Diagramm zur Erläuterung der Anordnung von Beschleunigungsaufnehmern,

Fig. 3 ein gefiltertes und ein ungefiltertes Beschleunigungssignal eines Heckaufpralls in einem Beschleunigungs-Zeit-Diagramm,

Fig. 4 verschiedene aus dem Beschleunigungssignal eines Heckaufpralls ermittelte Größen in einem Beschleunigungs-Zeit-Diagramm,

Fig. 5 ein weiteres Beschleunigungs-Zeit-Diagramm mit einem Beschleunigungssignal während eines Heckaufpralls, sowie einem daraus ermittelten kontinuierlichen Integral,

Fig. 6 ein Flußdiagramm eines ersten Verfahrens zum Auslösen einer Sicherheitseinrichtung,

Fig. 7 ein Flußdiagramm eines zweiten Verfahrens zum Auslösen einer Sicherheitseinrichtung,

Fig. 8 ein Flußdiagramm eines dritten Verfahrens zum Auslösen einer Sicherheitseinrichtung und

Fig. 9 ein Flußdiagramm eines Verfahrens zum Ausschließen einer Fehlauslösung einer Sicherheitseinrichtung.

In den verschiedenen Figuren der Zeichnung sind einander entsprechende Teile und Verfahrensschritte mit den gleichen Bezugszeichen versehen.

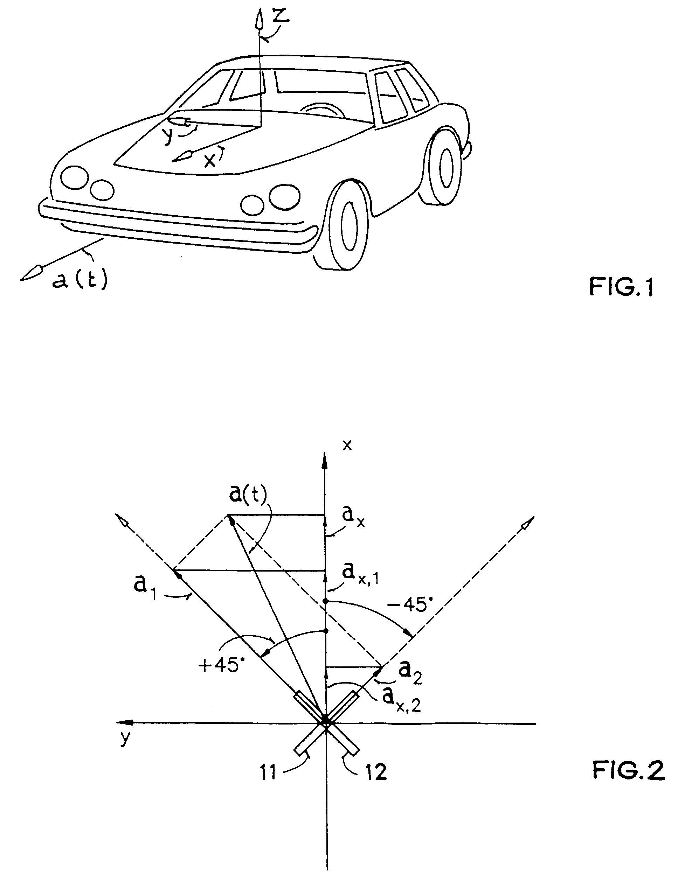

Für die Ermittlung des Auslösezeitpunkts eines Sicherheitssystems in einem Fahrzeug zur Personenbeförderung, insbesondere in einem Personenkraftwagen, ist es erforderlich, den zeitlichen Verlauf der in Fahrzeuglängsrichtung auf das Fahrzeug wirkenden Beschleunigung $a_x(t)$ zu ermitteln. Hierzu kann ein einzelner, in Fahrzeuglängsrichtung, also wie in **Fig. 1** gezeigt, in x-Richtung ausgerichteter Beschleunigungsaufnehmer vorgesehen sein. Zweckmäßiger weise werden jedoch zwei Beschleunigungsaufnehmer 11, 12 vorgesehen, die symmetrisch zur x-Richtung des Fahrzeugs angeordnet sind. Die in Fahrzeuglängsrichtung wirkende Beschleunigung $a_x(t)$ läßt sich besonders einfach ermitteln, wenn die Beschleunigungsaufnehmer 11, 12 unter einem Winkel von + 45° bzw. - 45° zur x-Richtung angeordnet sind.

Wirkt bei einem Heckaufprall eine Beschleunigung a(t) auf das Fahrzeug, so liefert jeder der Beschleunigungsaufnehmer 11, 12 ein Beschleunigungssignal $a_1$, $a_2$, das dem jeweils in Richtung des entsprechenden Beschleunigungsaufnehmers 11, 12 wirkenden Anteil der Beschleunigung a(t) entspricht. Aus den Beschleunigungssignalen $a_1$, $a_2$ läßt sich dann ein der in x-Richtung auf das Fahrzeug wirkenden Beschleunigung $a_x(t)$ entsprechendes Beschleunigungssignal $a_x$ nach folgender Gleichung berechnen:

$$a_x = a_1 \cdot \cos 45° + a_2 \cdot \cos(- 45°)$$

Bei der weiteren Erläuterung der Erfindung wird davon ausgegangen, daß eine in + x-Richtung auf das Fahrzeug wirkende Beschleunigung, die zu einem Geschwindigkeitsgewinn führt, als negativ angesehen wird, während eine in - x-Richtung wirkende Beschleunigung, die zu einer Verzögerung und damit zu einem Geschwindigkeitsverlust führt, als positiv angenommen wird. Anstelle dieser Vereinbarung kann für die Durchführung des erfindungsgemäßen Verfahrens auch festgelegt werden, daß eine in + x-Richtung des Fahrzeugs wirkende Beschleunigung positiv und eine in - x-Richtung wirkende, das Fahrzeug verzögernde Beschleunigung als negativ angesehen wird.

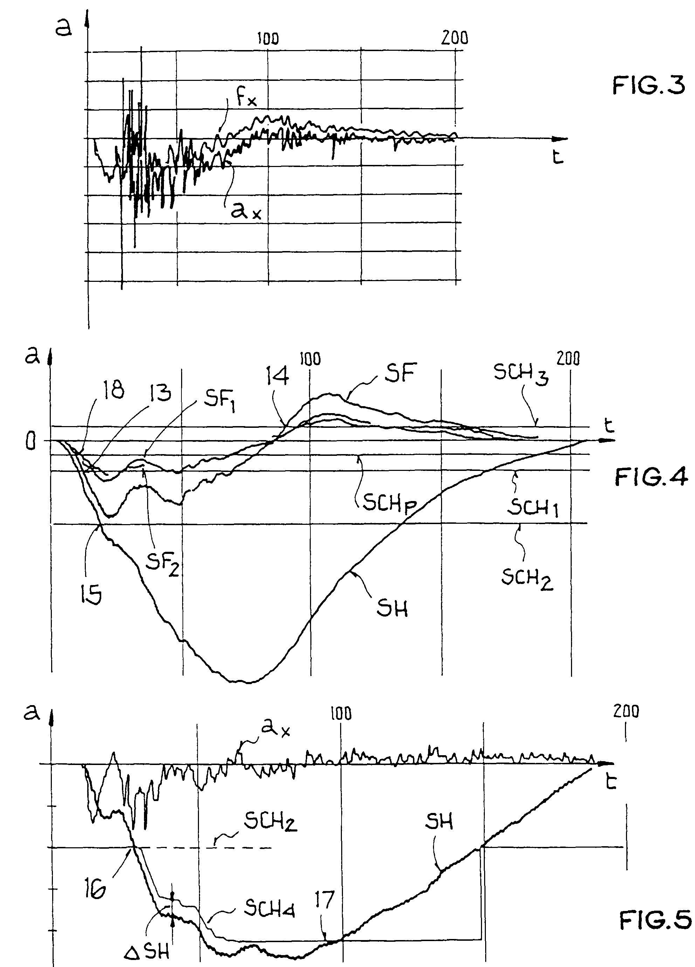

**Fig. 3** zeigt, das von einer Beschleunigungsaufnehmeranordnung gelieferte Beschleunigungssignal $a_x$ sowie ein Beschleunigungssignal $f_x$, das mittels eines Bandpaßfilters aus dem Beschleunigungssignal $a_x$ erhalten wurde. Es zeigt sich in Fig. 3 deutlich, daß das gefilterte Beschleunigungssignal $f_x$ vor dem ungefilterten Beschleunigungssignal $a_x$ in den positiven Bereich überschwingt. Dieses Phänomen wird durch die Hochpaßwirkung des Bandpaßfilters erzeugt und zur Feststellung des Zeitpunkts herangezogen, zu dem der Körper einer in einem Fahrzeug befindlichen Person nach einem Heckaufprall beginnt, sich wieder nach vorne zu bewegen.

Die Feststellung geschieht dadurch, daß vorbereitende Maßnahmen zur Auslösung einer Insassenschutzvorrichtung eingeleitet werden, sobald das gefilterte Signal eine vorbestimmte Schwelle überschreitet. Das ungefilterte Beschleunigungssignal erreicht diese Schwelle erst zu einem späteren Zeitpunkt. Deshalb muß bei Auswertung ausschließlich des ungefilterten Signals eine Schwelle bei einem absolut kleineren Beschleunigungswert angesetzt werden, damit die vorbereitenden Maßnahmen nicht verspätet eingeleitet werden.

Um den Auslösezeitpunkt konkret zu ermitteln, wird zunächst ein Fensterintegral SF gebildet, das jeweils zum momentanen Zeitpunkt $t_n$ eine Summe von Beschleunigungswerten $a_{x,i}$ aus einem bis $k\Delta t$ zurückreichenden Zeitfenster enthält. Dabei ist $\Delta t$ die Zeit zwischen zwei aufeinander folgenden Zeitpunkten $t_n$ und $t_{n+1}$, zu denen jeweils der augenblickliche Beschleunigungswert $a_{x,n}$ des Beschleunigungssignals $a_x$ für eine weitere Auswertung festgehalten wird. Das Fensterintegral SF läßt sich als Summe der Beschleunigungswerte $a_{x,n}$ durch folgende Gleichung ausdrücken:

$$SF = \sum_{i=n-k}^{n} a_{x,i}$$

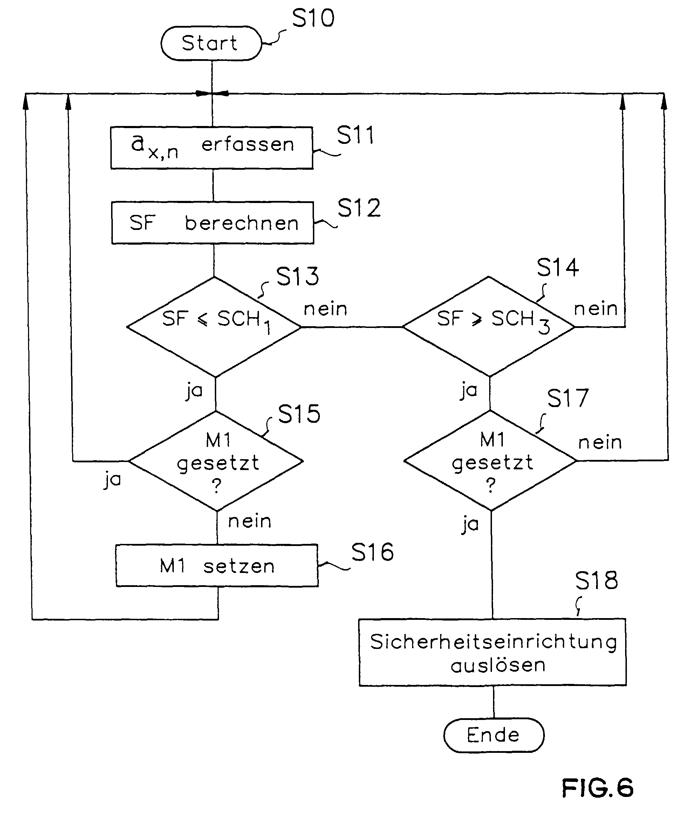

Mit Hilfe dieses Fensterintegrals SF läßt sich der Auslösezeitpunkt für eine Sicherheitseinrichtung, insbesondere einem Gurtstraffer, dadurch ermitteln, daß, wie in **Fig. 6** dargestellt, nach dem Start S10 einer Überwachungsroutine die einzelnen Beschleunigungswerte $a_{x,n}$ für die in Fahrzeuglängsrichtung wirkende Beschleunigung $a_x(t)$ erfaßt werden (Schritt S11), um im nachfolgendem Schritt S12 das Fensterintegral SF zu berechnen. Der zeitliche Verlauf des Fensterintegrals SF ist in **Fig. 4** dargestellt. Nachdem das Fensterintegral SF berechnet wurde, wird im Schritt S13 festgestellt, ob das Fensterintegral SF kleiner oder gleich einer ersten Schwelle SCH1 ist. Ist dies nicht der Fall, wird im Schritt S14 überprüft, ob das Fensterintegral SF größer oder gleich einem Auslöseschwellenwert SCH3 ist. Falls dies ebenfalls nicht der Fall ist, liegt der Wert des Fensterintegrals SF zwischen den beiden Schwellenwerten SCH1 und SCH3 und die Überwachung wird fortgesetzt, da eine Auslösung der Sicherheitseinrichtung momentan weder zu erwarten noch erforderlich ist.

Wird jedoch im Schritt S13 festgestellt, daß das Fensterintegral SF den Schwellenwert SCH1 erreicht oder unterschritten hat, wie im Punkt 13 in Fig. 4, so wird im Schritt S15 überprüft, ob ein Auslösemerker M1 gesetzt ist. Falls der Auslösemerker M1 nicht gesetzt ist, wird er in Schritt S16 gesetzt, ansonsten geht die Routine zurück zum Schritt S11, um weiterhin die auf das Fahrzeug wirkende Beschleunigung zu überwachen.

Sobald das Fensterintegral SF den Schwellenwert SCH1 wieder überschritten hat, werden von der Überwachungsroutine kontinuierlich die Schritte S11, S12, S13 und S14 ausgeführt, um den Zeitpunkt zu erfassen, in dem das Fensterintegral SF die Auslöseschwelle SCH3 (Punkt 14 in Fig. 4) überschreitet. Sobald dies im Schritt S14 festgestellt wird, wird im Schritt S17 überprüft, ob der Auslösemerker M1 gesetzt ist. Ist dies der Fall, so wird im Schritt S18 die Sicherheitseinrichtung ausgelöst und die Routine beendet.

Wird in den Schritten S14, S17 festgestellt, daß das Fensterintegral SF die Auslöseschwelle SCH3 überschritten hat, ohne das der Auslösemerker M1 gesetzt wurde, so findet keine Auslösung der Sicherheitseinrichtung statt. Auf diese Weise läßt sich bei einem Überschreiten der Auslöseschwelle SCH3 durch das Fensterintegral SF infolge eines Falschsignals eine Fehlauslösung der Sicherheitseinrichtung verhindern.

Erfindungsgemäß wird also bei einem Heckaufprall eine Auslösung der Sicherheitseinrichtung, insbesondere des Gurtstraffers nur dann durchgeführt, wenn das Fensterintegral SF zunächst einen ersten Schwellenwert SCH1 unterschritten hat und dann anschließend die Auslöseschwelle SCH3 übersteigt.

Um eine Fehlauslösung der Sicherheitseinrichtung infolge von Falschsignalen noch zuverlässiger ausschließen zu können, ist bei einem weiteren erfindungsgemäßen Verfahren vorgesehen, daß neben dem Fensterintegral SF ein weiteres Integral SH auf das Erreichen eines Schwellenwertes SCH2 überwacht wird. Dieses weitere Integral SH, das im Folgenden Heckintegral genannt wird, berechnet sich nach folgender Gleichung:

$$SH_0 = 0$$

$$SH_n = SH_{n-1} + a_{x,n} + f_R(SF_n)$$

In dieser Rekursionsformel ist die Funktion $f_R$ ($SF_n$) eine Rückführfunktion, die wirksam wird, sobald der Wert des Fensterintegrals SF innerhalb eines um die Nullage symmetrischen Bandes zu liegen kommt. Die Aufgabe der Rückführfunktion $f_R(SF_n)$ ist es, das Heckintegral SH bei fehlender Beschleunigung wieder gegen Null zu führen.

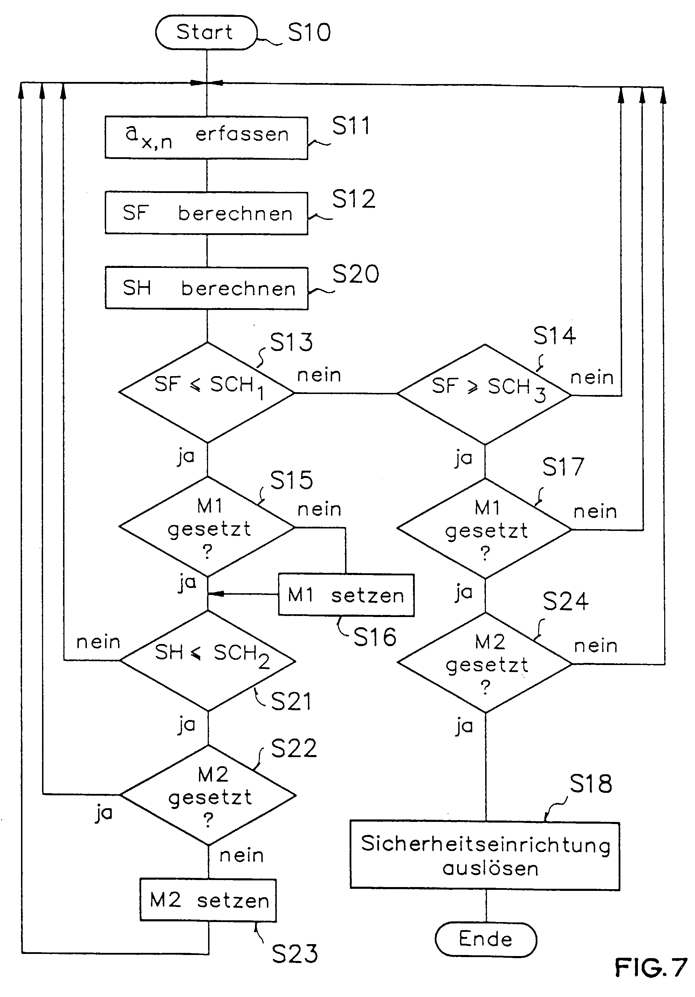

Wie in **Fig. 7** dargestellt, wird zunächst, wie bei dem anhand von Fig. 6 beschriebenen Verfahren, zu jedem Zeitpunkt $t_n$ der Beschleunigungswert $a_{x,n}$ im Schritt S11 erfaßt, um anschließend im Schritt S12 das Fensterintegral SF zu berechnen. Danach wird im Schritt S20 das Heckintegral SH berechnet. Danach wird in den Schritten S13 und S14, wie oben bereits anhand von Fig. 6 beschrieben, festgestellt, ob sich das Fensterintegral SF in dem Bereich zwischen dem ersten Schwellenwert SCH1 und der Auslöseschwelle SCH3 befindet. Solange dies der Fall ist, wird von einem normalen Fahrbetrieb des Fahrzeugs ausgegangen.

Sobald jedoch das Fensterintegral SF den Schwellenwert SCH1 unterschreitet (Punkt 13 in Fig. 4), wird in den Schritten S15, S16 der Auslösemerker M1 überprüft und ggf. gesetzt. An- schließend wird im Schritt S21 festgestellt, ob das Heckintegral SH einen zweiten Schwellenwert SCH2 unterschritten hat. Solange dies nicht der Fall ist, werden das Fensterintegral SF und das Heckintegral SH wie beschrieben weiter überwacht.

Sobald jedoch das Heckintegral SH den zweiten Schwellenwert SCH2 unterschreitet (Punkt 15 in Fig. 4), wird im Schritt S22 geprüft, ob ein zweiter Auslösemerker M2 gesetzt ist. Falls dies der Fall ist, wird die Überwachung bei Schritt S11 fortgesetzt. Falls der Auslösemerker M2 noch nicht gesetzt ist, wird dieser in Schritt S23 gesetzt und die Routine kehrt zum Schritt S11 zurück, um die Überwachung fortzuführen.

Sobald das Heckintegral SH sein Minimum durchlaufen hat, was durch das Überschreiten der positiven Auslöseschwelle SCH3 durch das Fensterintegral SF (Punkt 14 in Fig. 4) festgestellt wird, führt die Abfrage im Schritt S14 zu einem positiven Ergebnis, woraufhin im Schritt S17 abgefragt wird, ob der erste Auslösemerker M1 gesetzt wurde. Falls dies der Fall ist, wird im Schritt S24 festgestellt, ob der zweite Auslösemerker M2 gesetzt ist. Falls auch das der Fall ist, wird im Schritt S18 die Sicherheitseinrichtung ausgelöst und die Routine beendet.

Ergibt sich jedoch nach einem Überschreiten der Auslöseschwelle SCH3 durch das Fensterintegral SF, daß einer der beiden voneinander unabhängigen Auslösemerker M1 oder M2 nicht gesetzt wurde, so findet keine Auslösung der Sicherheitseinrichtung statt, da ein derartiges Überschreiten der Auslöseschwelle SCH3 durch das Fenstersignal SF dann auf ein Falschsignal zurückzuführen ist.

Bei dem anhand von Fig. 7 beschriebenen erfindungsgemäßen Verfahren wird also durch die Verwendung eines zweiten unabhängigen Auslösemerkers M2 eine zusätzliche Sicherheit gegen Fehlauslösungen geschaffen.

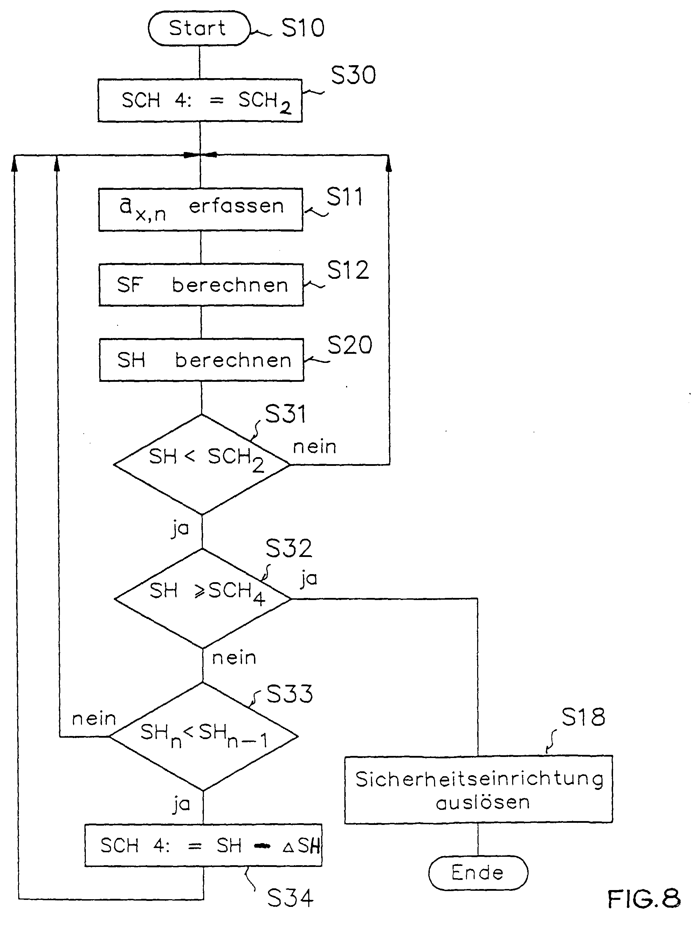

Bei einem anderen erfindungsgemäßen Verfahren wird der Auslösezeitpunkt nur mit Hilfe des Heckintegrals SH ermittelt, wobei wie in **Fig. 8** dargestellt ist, nach dem Start des Überwachungsprogramms zunächst im Schritt S30 eine Auslöseschwelle SCH4 auf den ersten Schwellenwert SCH2 gesetzt wird. Anschließend wird in den Schritten S11 und S20 für jeden Zeitpunkt $t_n$ der Beschleunigungswert $a_{x,n}$ erfaßt sowie das Heckintegral SH berechnet. Danach wird im Schritt S31 festgestellt, ob das Heckintegral SH den Schwellenwert SCH2 unterschritten hat oder nicht. Ist dies nicht der Fall, so liegt ein normaler Fahrbetrieb des Fahrzeugs vor und die Schritte S11, S12, S20 und S31 werden ständig nacheinander durchgeführt.

Unterschreitet im Falle eines Heckaufpralls das Heckintegral SH den Schwellenwert SCH2 (Punkt 16 in Fig. 5), so geht die Routine vom Schritt S31 zum Schritt S32 weiter, in dem festgestellt wird, ob das momentane Heckintegral SH größer oder gleich dem Auslöseschwellenwert SCH4 ist. Nach dem ersten Unterschreiten des Schwellenwertes SCH2 ist dies ausgeschlossen. Somit wird im Schritt S33 zunächst überprüft, ob der aktuelle Wert des Heckintegrals $SH_n$ kleiner ist, als der unmittelbar vorhergehende Wert des Heckintegrals $SH_{n-1}$. Wenn auch dies der Fall ist, wenn also das Heckintegral SH weiter kleiner wird, dann wird im Schritt S34 der Schwellenwert SCH4 aus dem aktuellen Wert des Heckintegrals $SH_n$ so berechnet, daß der Schwellenwert SCH4 größer ist als der aktuelle Wert des Heckintegrals $SH_n$. SCH4 wird nach der Formel $SCH4 = SH_n - \Delta SH$ berechnet, wobei $\Delta SH$ dasselbe Vorzeichen besitzt wie das Heckintegral SH. Danach wird die Überwachung beginnend mit dem Schritt S11 fortgesetzt.

Erfindungsgemäß wird also die Auslöseschwelle SCH4 nach dem Unterschreiten des ersten Schwellenwertes SCH2 mit dem weiter abfallenden Heckintegral SH mitgezogen, wobei ein geringfügiges Ansteigen des Heckintegrals infolge von Oszillationen unberücksichtigt bleibt. Erst wenn das Heckintegral SH nach dem Durchlaufen seines Minimums wieder ansteigt, wird die nachgezogene Auslöseschwelle SCH4 erreicht (Punkt 17 in Fig. 5), was in Schritt S32 festgestellt wird. Nach dem Erreichen der Auslöseschwelle SCH4 durch das Heckintegral SH wird im Schritt S18 die Sicherheitseinrichtung ausgelöst.

Einen zusätzlichen Schutz gegen Fehlauslösungen der Sicherheitseinrichtung infolge von Falschsignalen kann bei einem mit zwei Beschleunigungsaufnehmern arbeiteten Sicherheitssystem dadurch erreicht werden, daß eine zusätzliche Plausibilitätsprüfung durchgeführt wird. Hierzu werden zwei voneinander unabhängige Fensterintegrale $SF_1$, $SF_2$ aus den von den Beschleunigungsaufnehmern 11, 12 gelieferten Beschleunigungssignalen $a_1$, $a_2$ berechnet. Die beiden Fensterintegrale $SF_1$ und $SF_2$ werden dann daraufhin

überwacht, ob sie einen Plausibilitätsschwellenwert SCHp unterschreiten (Punkt 18, Fig. 4).

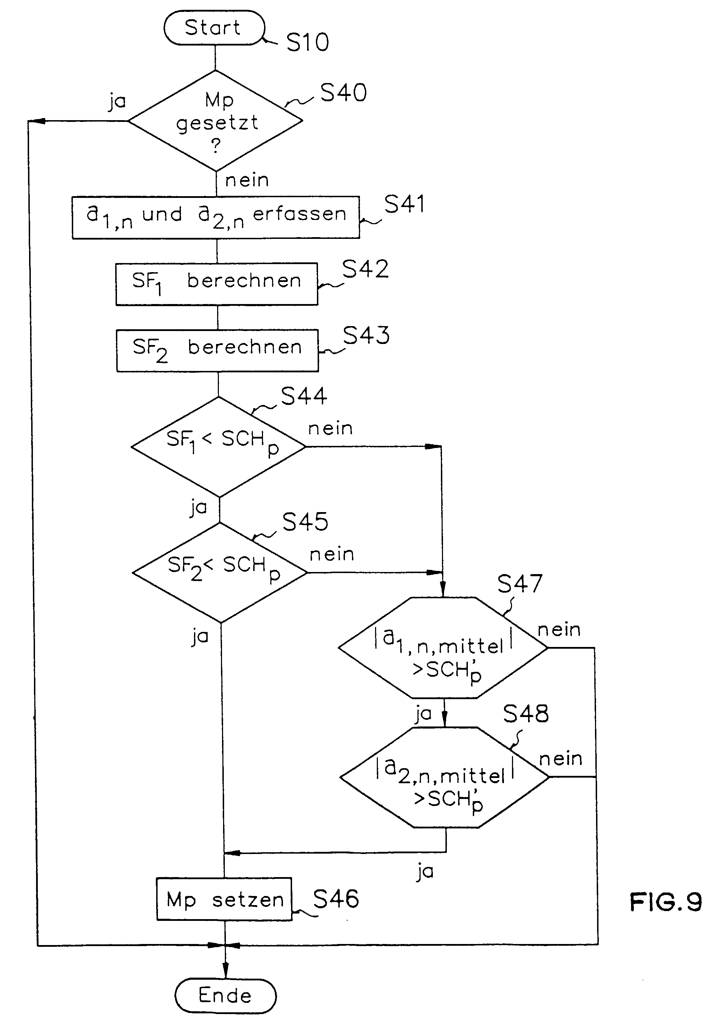

Bei dieser Plausibilitätsprüfung wird, wie in **Fig. 9** dargestellt, zunächst in einem Schritt S40 festgestellt, ob ein Auslösemerker Mp gesetzt ist. ist dies der Fall, so wird die Plausibilitätsprüfung unmittelbar beendet und die Überwachung des Fensterintegrals SF und/oder des Heckintegrals SH wird wie anhand der Figuren 6 bis 8 beschriebenen durchgeführt. Ist der Auslösemerker Mp nicht gesetzt, so werden in einem Schritt S41 die von dem Beschleunigungsaufnehmern 11, 12 gelieferten Beschleunigungssignale $a_{1,n}$ und $a_{2,n}$ erfaßt, um in den Schritten S42 und S43 die jeweiligen Fensterintegrale $SF_1$ und $SF_2$ zu berechnen. Danach wird in den Schritten S44 und S45 überprüft, ob beide Fensterintegrale $SF_1$, $SF_2$ den Plausibilitätsschwellenwert SCHp unterschritten haben. Ist dies der Fall, so wird im Schritt S46 der Plausibilitätsmerker Mp gesetzt.

Um zu verhindern, daß der Plausibilitätsmerker Mp nicht gesetzt wird, wenn eines der beiden Fensterintegrale $SF_1$ oder $SF_2$ den Plausibilitätsschwellenwert SCHp nicht unterschritten hat, obwohl die auf das Fahrzeug wirkende Beschleunigung dies erfordert, wird in den Schritten S47 und S48 die aktuelle Beschleunigungslage dadurch berücksichtigt, daß die betragsmäßig mittleren Beschleunigungswerte $a_{1,n,mittel}$ und $a_{2,n,mittel}$ der beiden Kanäle mit einem weiteren Schwellenwert SCHp' verglichen werden. Sind die aus den Beschleunigungswerten $a_1$ und $a_2$ berechnete mittleren Beschleunigungswerte $a_{1,n,mittel}$ und $a_{2,n,mittel}$ jeweils (UND-Verknüpfung) betragsmäßig größer als der weitere Schwellenwert SCHp', so wird ebenfalls im Schritt S46 der Auslösemerker Mp gesetzt. Die mittleren Beschleunigungswerte $a_{1,n,mittel}$ und $a_{2,n,mittel}$ errechnen sich z. B. aus den beiden letzten jeweiligen Meßwerten $a_{1,n}$ und $a_{1,n-1}$ bzw. $a_{2,n}$ und $a_{2,n-1}$.

Die Plausibilitätsprüfung wird zweckmäßiger Weise so durchgeführt, daß der weitere Auslösemerker Mp für jeden Zeitpunkt $t_n$, zu dem jeweils eine der zur Durchführung des erfindungsgemäßen Verfahrens vorgesehenen Überwachungsroutinen mit den Überprüfungen des Fensterintegrals SF und/oder Heckintegrals SH beginnt, eindeutig gesetzt oder nicht gesetzt ist.

Insbesondere kann der von der Plausibilitätsprüfung ermittelte Auslösemerker Mp zur Verhinderung einer Fehlauslösung auf zwei verschiedene Arten genutzt werden. Zum einen kann der Auslösemerker Mp ähnlich wie die Auslösemerker M1, M2 nach dem Überschreiten der jeweiligen Auslöseschwelle SCH3, SCH4 abgefragt werden, um ein Auslösen der Sicherheitseinrichtung zuzulassen oder zu verhindern. Zum anderen ist es aber auch möglich, den von der Plausibilitätsprüfung gelieferten Auslösemerker Mp bereits nach dem Berechnen des Fensterintegrals SF und des Heckintegrals SH abzufragen, noch bevor im Schritt S13 bzw. im Schritt S31 das Unterschreiten eines ersten Schwellenwerts SCH1 bzw. SCH2 durch das Fensterintegral SF bzw. das Heckintegral SH überprüft wird, so daß die Überwachung des Fensterintegrals SF bzw. des Heckintegrals SH nur dann durchgeführt wird, wenn der Plausibilitäts-Auslösemerker Mp gesetzt ist. Anderenfalls kann auf die Überprüfung des Fensterintegrals SF und des Heckintegrals SH verzichtet werden und direkt mit deren Berechnung für den nächsten Zeitpunkt $t_n$ begonnen werden.

Durch diese zusätzliche Plausibilitätsprüfung wird eine besondere Sicherheit gegen Fehlauslösungen der Sicherheitseinrichtung geschaffen, so daß auf mechanische Sicherheitsschalter, die sonst zur Vermeidung von Fehlauslösungen infolge von Falschsignalen eingesetzt werden, verzichtet werden kann. Das erfindungsgemäße Verfahren ermöglicht somit nicht nur die Betätigung einer Sicherheitseinrichtung, insbesondere eines Gurtstraffers zu einem optimalen Auslösezeitpunkt, sondern auch die Verwendung einer vereinfachten Auslöseschaltung.

## Patentansprüche

1. Verfahren zum Auslösen einer Sicherheitseinrichtung bei Heckaufprall, insbesondere eines Gurtstraffers, in einem Fahrzeug zur Personenbeförderung,

   a) bei dem eine auf das Fahrzeug wirkende Beschleunigung (a(t)) mit einem einen Extremwert aufweisenden zeitlichen Verlauf erfaßt und in ein Beschleunigungssignal ($a_x$) umgesetzt wird, das der in Fahrzeuglängsrichtung wirkenden Beschleunigung ($a_x(t)$) entspricht,

   b) bei dem das Beschleunigungssignal ($a_x$) summiert oder integriert wird, um zumindest ein Fensterintegral (SF) zu bilden, in dem zum momentanen Zeitpunkt ($t_n$) eine Summe von Beschleunigungswerten ($a_{x,i}$) eines über mehrere Zeitintervalle ($k\Delta t$) zurückreichenden Zeitfenster nach folgender Formel berechnet wird,

$$SF = \sum_{i=n-k}^{n} a_{x,i}$$

   und dabei ($a_{x,i}$) der wert des Beschleunigungssignals ($a_{x,i}$) zur Zeit $t_i$ ist
   und n den aktuellen Zeitpunkt angibt,

   c) bei dem ein Auslösesignal zur Betätigung der Sicherheitseinrichtung erzeugt wird, wenn das aus dem Beschleunigungssignal ($a_x$) ermittelte Fensterintegral SF einen Auslöseschwellenwert (SCH3) erreicht hat, nachdem es einen ersten Schwellenwert (SCH1) erreicht hat, wobei die Schwellenwerte (SCH1) und (SCH3) genau eine der Beziehungen SCH1 < 0 < SCH3 oder SCH3 < 0 < SCH1 erfüllen.

2. Verfahren zum Auslösen einer Sicherheitseinrichtung bei Heckaufprall, insbesondere eines Gurtstraffers, in einem Fahrzeug zur Personenbeförderung,

   a) bei dem eine auf das Fahrzeug wirkende Beschleunigung (a(t)) mit einem einen Extremwert aufweisenden zeitlichen Verlauf erfaßt und in ein Beschleunigungssignal ($a_x$) umgesetzt wird, das der in Fahrzeuglängsrichtung wirkenden Beschleunigung ($a_x(t)$) entspricht,

   b) bei dem das Beschleunigungssignal ($a_x$) summiert oder integriert wird, um ein Fensterintegral ($SF_n$) zu bilden, in dem zum momentanen Zeitpunkt ($t_n$) eine Summe von Beschleunigungswerten ($a_{x,i}$) eines über mehrere Zeitintervalle ($k\Delta t$) zurückreichenden Zeitfenster nach folgender Formel berechnet wird:

   $$SF_n = \sum_{i=n-k}^{n} a_{x,i}$$

   und dabei ($a_{x,i}$) der Wert des Beschleunigungssignals ($a_x$) zur Zeit $t_i$ ist und n den aktuellen Zeitpunkt angibt,

   c) bei dem ein Heckintegral (SH) nach folgender Formel berechnet wird:

   $$SH_0 = 0$$

   $$SH_n = SH_{n-1} + a_{x,n} + f_R(SF_n)$$

   wobei $a_{x,n}$ der aktuelle Wert des Beschleunigungssignals ($a_x$) ist und $f_R(SF_n)$ eine Rückführfunktion ist, die das Heckintegral (SH) auf Null zurückführt, wenn keine Beschleunigung (a(t)) vorliegt,

   d) bei dem ein Auslösesignal zur Betätigung der Sicherheitseinrichtung erzeugt wird, wenn das aus dem Beschleunigungssignal ($a_x$) ermittelte Fensterintegral (SF) und Heckintegral (SH) ihre zugehörigen Auslöseschwellenwerte (SCH3; SCH4) erreicht haben, nachdem diese einen ersten zugehörigen Schwellenwert (SCH1; SCH2) erreicht haben, wobei die Schwellenwerte genau eine der Beziehungen SCH4 < SCH2 < 0 oder SCH4 > SCH2 > 0 erfüllen.

3. Verfahren nach einem der vorangehenden Ansprüche, bei dem ein Auslösemerker (M1; M2) gesetzt wird, wenn das Fensterintegral (SF) oder Heckintegral (SH) seinen ersten zugehörigen Schwellenwert (SCH1) oder (SCH2) erreicht hat.

4. Verfahren nach Anspruch 2, bei dem nach Erreichen des ersten Schwellenwertes (SCH2) durch das Heckintegral (SH) der Auslöseschwellenwert (SCH4) in Abhängigkeit vom Heckintegral (SH) berechnet wird.

5. Verfahren nach Anspruch 5, bei dem der Auslöseschwellenwert (SCH4) aus dem aktuellen Wert (SHn) des Heckintegrals (SH) nach folgender Formel berechnet wird:

   $$SCH4 = SH_n - \Delta SH,$$

   wobei $\Delta SH$ dasselbe Vorzeichen besitzt, wie das Heckintegral (SH).

6. Verfahren nach einem der vorangehenden Ansprüche, bei dem das Beschleunigungssignal ($a_x$) einer Hochpaßfilterung unterzogen wird.

7. Verfahren nach einem der vorhergehenden Ansprüche, bei dem die auf das Fahrzeug wirkende Beschleunigung (a(t)) mittels zweier Beschleunigungsaufnehmer (11; 12) erfaßt wird, daß die von den beiden Beschleunigungsaufnehmern (11; 12) gelieferten Beschleunigungssignale ($a_1$, $a_2$) jeweils für sich integriert werden, daß ein Auslösemerker (Mp) gesetzt wird, wenn jedes der beiden aus den Beschleunigungssignalen ($a_1$, $a_2$) ermittelten Fensterintegrale (SF1; SF2) einen Schwellenwert (SCHp) erreicht, oder wenn die jeweiligen Beträge der Mittelwerte der jeweiligen Beschleunigungssignale ($a_1$, $a_2$) einen entsprechenden Schwellenwert (SCHp') überschreiten, und daß ein Auslösesignal nur dann erzeugt wird, wenn der Auslösemerker (Mp) gesetzt ist.

**Claims**

1. Method for triggering a safety device, in particular a belt tensioner, upon the occurrence of a rear collision in a passenger transport vehicle,

   a) in which an acceleration (a(t)), which acts on the vehicle and has a time characteristic having an extreme value, is detected and converted into an acceleration signal ($a_x$), which corresponds to the acceleration ($a_x(t)$) acting in the longitudinal direction of the vehicle,

b) in which the acceleration signal $(a_x)$ is summed or integrated in order to form at least one window integral (SF), in which, at the instantaneous moment $(t_n)$, a sum of acceleration values $(a_{x,i})$ of a time window going back over a plurality of time intervals $(k\Delta t)$ is calculated according to the following formula,

$$SF = \sum_{i=n-k}^{n} a_{x,i} \; ,$$

where $(a_{x,i})$ is the value of the acceleration signal $(a_{x,i})$ at the time $t_i$ and n indicates the actual moment,

c) in which a trigger signal for actuating the safety device is generated when the window integral SF determined from the acceleration signal $(a_x)$ has reached a trigger threshold value (SCH3) after having reached a first threshold value (SCH1), wherein the threshold values (SCH1) and (SCH3) exactly fulfil one of the relationships SCH1<0<SCH3 or SCH3<0<SCH1.

2. Method for triggering a safety device, in particular a belt tensioner, upon the occurrence of a rear collision in a passenger transport vehicle,

a) in which an acceleration (a(t)), which acts on the vehicle and has a time characteristic having an extreme value, is detected and converted into an acceleration signal $(a_x)$, which corresponds to the acceleration $(a_x(t))$ acting in the longitudinal direction of the vehicle,

b) in which the acceleration signal $(a_x)$ is summed or integrated in order to form a window integral $(SF_n)$, in which, at the instantaneous moment $(t_n)$, a sum of acceleration values $(a_{x,i})$ of a time window going back over a plurality of time intervals $(k\Delta t)$ is calculated according to the following formula:

$$SF_n = \sum_{i=n-k}^{n} a_{x,i} \; ,$$

where $(a_{x,i})$ is the value of the acceleration signal $(a_x)$ at the time $t_i$ and n indicates the actual moment,

c) in which a rear integral (SH) is calculated according to the following formula:

$$SH_0 = 0$$

$$SH_n = SH_{n-1} + a_{x,n} + f_R(SF_n),$$

where $a_{x,n}$ is the actual value of the acceleration signal $(a_x)$ and $f_R(SF_n)$ is a reset function, which resets the rear integral (SH) to zero in the absence of an acceleration (a(t)),

d) in which a trigger signal for actuating the safety device is generated when the window integral (SF) determined from the acceleration signal $(a_x)$ and the rear integral (SH) have reached their associated trigger threshold values (SCH3; SCH4) after having reached a first associated threshold value (SCH1; SCH2), wherein the threshold values exactly fulfil one of the relationships SCH4<SCH2<0 or SCH4>SCH2>0.

3. Method according to any one of the preceding claims, in which a trigger flag (M1; M2) is set when the window integral (SF) or rear integral (SH) has reached its first associated threshold value (SCH1) or (SCH2).

4. Method according to Claim 2, in which the trigger threshold value (SCH4) is calculated as a function of the rear integral (SH) after the rear integral (SH) has reached the first threshold value (SCH2).

5. Method according to Claim 5 (sic), in which the trigger threshold value (SCH4) is calculated from the actual value $(SH_n)$ of the rear integral (SH) according to the following formula:

$$SCH4 = SH_n - \Delta SH,$$

where $\Delta SH$ has the same sign as the rear integral (SH).

6. Method according to any one of the preceding claims, in which the acceleration signal $(a_x)$ is subjected to high-pass filtering.

7. Method according to any one of the preceding claims, in which the acceleration (a(t)) acting on the vehicle is detected by means of two acceleration pick-ups (11; 12), that the acceleration signals $(a_1, a_2)$ delivered by the two acceleration pick-ups (11; 12) are in each case integrated separately, that a trigger flag (Mp) is set when each of the two window integrals (SF1; SF2) determined from the acceleration signals ($a_1$, $a_2$) reaches a threshold value (SCHp) or when the respective magnitudes of the average values of the respective acceleration signals ($a_1$, $a_2$) exceed a corresponding threshold value (SCHp'), and that a trigger signal is only generated when the trigger flag (Mp) is set.

## Revendications

1. Procédé pour déclencher un dispositif de sécurité dans le cas d'un choc arrière, notamment pour le déclenchement d'un tendeur de ceinture, dans un véhicule utilisé pour le transport de personnes,

a) selon lequel une accélération (a(t)) agissant sur le véhicule et ayant une allure dans le temps présentant une valeur extrême, est détectée et convertie en un signal d'accélération ($a_x$), qui correspond à l'accélération ($a_x(t)$) qui agit dans la direction longitudinale du véhicule,
b) selon lequel le signal d'accélération ($a_x$) est sommé ou intégré pour la formation d'au moins une intégrale de fenêtre (SF), dans laquelle à l'instant considéré ($t_n$), une somme de valeurs d'accélération ($a_{x,i}$) d'une fenêtre temporelle englobant plusieurs intervalles ($k\Delta t$) est calculée conformément à la formule suivante

$$Sf = \sum_{i=n-k}^{n} a_{x,i}$$

($a_{x,i}$) représentant la valeur du signal d'accélération ($a_{x,i}$) à l'instant $t_i$ et n désignant l'instant actuel,
c) selon lequel un signal de déclenchement pour l'actionnement du dispositif de sécurité est produit lorsque l'intégrale de fenêtre SF déterminée à partir du signal d'accélération ($a_x$) a atteint son seuil de déclenchement (SCH3) après avoir atteint une première valeur de seuil (SCH1), les valeurs de seuil (SCH1) et (SCH3) satisfaisant de façon précise à l'une des relations SCH1<0<SCH3 ou SCH3<0<SCH1.

2. Procédé pour déclencher un dispositif de sécurité dans le cas d'un choc arrière, notamment pour le déclenchement d'un tendeur de ceinture, dans un véhicule utilisé pour le transport de personnes

a) selon lequel une accélération (a(t)) agissant sur le véhicule et ayant une allure dans le temps présentant une valeur extrême, est détectée et convertie en un signal d'accélération ($a_x$), qui correspond à l'accélération ($a_x(t)$) qui agit dans la direction longitudinale du véhicule,
b) selon lequel le signal d'accélération ($a_x$) est sommé ou intégré pour la formation d'au moins une intégrale de fenêtre ($SF_n$), dans laquelle à l'instant considéré ($t_n$), une somme de valeurs d'accélération ($a_{x,i}$) d'une fenêtre temporelle englobant plusieurs intervalles ($k\Delta t$) est calculée conformément à la formule suivante

$$Sf = \sum_{i=n-k}^{n} a_{x,i}$$

($a_{x,i}$) représentant la valeur du signal d'accélération ($a_{x,i}$) à l'instant $t_i$ et n désignant l'instant actuel,
c) selon lequel une intégrale arrière (SH) est calculée conformément aux formules suivantes :

$$SH_0 = 0$$

$$SH_n = SH_{n-1} + a_{x,n} + f_R (SF_n)$$

$a_{x,n}$ représentant la valeur actuelle du signal d'accélération ($a_x$) et $f_R(SF_n)$ représentant une fonction de retour, qui ramène l'intégrale arrière (SH) à zéro lorsqu'aucune accélération (a(t)) n'est présente,
d) selon lequel un signal de déclenchement pour l'actionnement du dispositif de sécurité est produit lorsque l'intégrale de fenêtre (SF) et l'intégrale arrière (SH), déterminées à partir du signal d'accélération ($a_x$), ont atteint leurs valeurs de seuil de déclenchement associées (SCH3; SCH4) après que ces valeurs ont atteint une première valeur de seuil (SCH1; SCH2), les valeurs de seuil satisfaisant de façon précise à l'une des relations SCH4<SCH2<0 ou SCH4>SCH2>0.

3. Procédé selon l'une des revendications précédentes, selon lequel un indicateur de déclenchement (M1; M2) est positionné lorsque l'intégrale de fenêtre (SF) ou l'intégrale arrière (SH) a atteint sa première valeur de seuil associée (SCH1) ou (SCH2).

4. Procédé selon la revendication 2, selon lequel une fois que la première valeur de seuil (SCH2) est atteinte par l'intégrale arrière (SH), la valeur de seuil de déclenchement (SCH4) est calculée en fonction de l'intégrale arrière (SH).

**5.** Procédé selon la revendication 5, selon lequel la valeur de seuil de déclenchement (SCH4) est calculée à partir de la valeur actuelle (SHn) de l'intégrale arrière (SH) conformément à la formule :

$$SCH4 = SH_x - \Delta\ SH,$$

$\Delta$SH possédant le même signe que l'intégrale arrière (SH).

**6.** Procédé selon l'une des revendications précédentes, selon lequel le signal d'accélération ($a_x$) est soumis à un filtrage passe-haut.

**7.** Procédé selon l'une des revendications précédentes, selon lequel l'accélération (a(t)), qui agit sur le véhicule, est détectée à l'aide de deux capteurs d'accélération (11;12), que les signaux d'accélération ($a_1$, $a_2$) délivrés par les deux capteurs d'accélération (11;12) sont intégrés chacun séparément, qu'un indicateur de déclenchement (Mp) est positionné lorsque chacune des deux intégrales (SF1; SF2) déterminées à partir des signaux d'accélération ($a_1$, $a_2$) atteint une valeur de seuil (SCHp) ou lorsque les valeurs absolues respectives des valeurs moyennes des signaux d'accélération respectifs ($a_1$, $a_2$) dépassent une valeur de seuil correspondante (SCHp') et qu'un signal de déclenchement est produit uniquement lorsque l'indicateur de déclenchement (Mp) est positionné.

FIG.1

FIG.2

FIG.3

FIG.4

FIG.5

Start — S10

$\bar{a}_{x,n}$ erfassen — S11

SF berechnen — S12

S13 · SF ≤ SCH$_1$ · nein

S14 · SF ≥ SCH$_3$ · nein

ja

ja

S15 · M1 gesetzt ? · ja · nein

S17 · M1 gesetzt ? · nein · ja

M1 setzen — S16

Sicherheitseinrichtung auslösen — S18

Ende

**FIG.6**

FIG.7

FIG.8

FIG.9